(19) Europäisches Patentamt

European Patent Office

Office européen des brevets

(11) **EP 4 509 391 A1**

(12) **EUROPEAN PATENT APPLICATION**

(43) Date of publication:
**19.02.2025 Bulletin 2025/08**

(21) Application number: **23191808.7**

(22) Date of filing: **17.08.2023**

(51) International Patent Classification (IPC):
**B62D 15/02** (2006.01)     **B60R 1/00** (2022.01)
**B62D 13/06** (2006.01)

(52) Cooperative Patent Classification (CPC):
**B62D 15/0265; B60R 1/22; B62D 15/0295;**
B60R 2300/305; B60R 2300/8086; B62D 13/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **KNORR-BREMSE Systeme für
Nutzfahrzeuge GmbH
80809 München (DE)**

(72) Inventors:
• **SZÖLLOSI, Adam
1119 Budapest (HU)**

• **BATAI, Andras
7623 Pecs (HU)**
• **NEMETH, Huba
1116 Budapest (HU)**
• **GYURKÓ, Zoltán
1047 Budapest (HU)**
• **KOMLOS, Tamas
6448 Csavoly (HU)**
• **SZOKOL, Tamas
1112 Budapest (HU)**
• **MERZA, Valér
2000 Szentendre (HU)**
• **ZÖLDHEGYI, Valter
2049 Diósd (HU)**
• **DUDAS, Zsolt
6728 Szeged (HU)**

(54) **METHOD FOR AVOIDING COLLISIONS AND VEHICLE**

(57)    The present invention relates to a method for avoiding collisions of a vehicle combination of a towing vehicle (10) and at least one trailer (20) towed by the towing vehicle (10), comprising the steps of:
- determining a current steering angle ($\vartheta$) of the towing vehicle (S1),
- calculating future positions of at least one outer point (10aa, 20aa) of the contour of the towing vehicle (10) in at least one direction of travel of the towing vehicle (10) based on the current steering angle ($\vartheta$) (S2),
- determining a current articulation angle ($\varphi$) of the at least one trailer (20) (S3),
- calculating future positions of at least one outer point (10aa, 20aa) of the contour of the at least one trailer (20) in at least one direction of travel of the at least one trailer (20) based on the current articulation angle ($\varphi$) and/or the current steering angle ($\vartheta$) (S4),
- displaying an image (31, 31') of a surrounding of at least the towing vehicle (10) and/or the at least one trailer (20) in the at least one direction of travel of the towing vehicle (10) and/or the at least one trailer (20) (S5), and
- displaying the calculated future positions of the towing vehicle (10) and/or the at least one trailer (20) on the image (31, 31') (S6).

Fig. 7

**Description**

The present invention relates to a method for avoiding collisions, a computer program product and a computer-readable medium to carry out the method and a respective vehicle.

For towing vehicles, it is known to display a trajectory of corner points of the towing vehicle or a respective tractrix, respectively, to inform a driver of future positions of the towing vehicle. However, in vehicle combinations such a towing vehicle and a trailer, the tractrix of the whole vehicle combination or the trailer is not displayed. This is a significant limitation, in particular in view of heavy commercial vehicle combinations, since the size of trailers is usually considerably bigger than the one of the towing vehicles.

It is an object of the present invention to provide an improved collision avoidance, in particular in view of vehicle combinations of a towing vehicle and at least one trailer towed by the towing vehicle.

The object is solved by the subject-matter of the independent claims. Further aspects of the present invention are subject to the dependent claims.

According to the present invention, a method for avoiding collisions of a vehicle combination of a towing vehicle and at least one trailer towed by the towing vehicle, comprising the steps of:

- determining a current steering angle of the towing vehicle,
- calculating future positions of at least one outer point of the contour of the towing vehicle in at least one direction of travel of the towing vehicle based on the current steering angle,
- determining a current articulation angle of the at least one trailer,
- calculating future positions of at least one outer point of the contour of the at least one trailer in at least one direction of travel of the at least one trailer based on the current articulation angle,
- displaying an image of a surrounding of at least the towing vehicle and/or the at least one trailer in the at least one direction of travel of the towing vehicle and/or the at least one trailer, and
- displaying the calculated future positions of the towing vehicle and/or the at least one trailer on the image.

Accordingly, the method provides calculated future positions of at least one outer point of a contour of the towing vehicle and/or calculated future positions of at least one outer point of a contour of the at least one trailer drawn onto the image of a surrounding. A driver or self-driving system may thereby recognize potential collisions to be avoided. The calculated future positions of the at least one outer point of the contour of the towing vehicle and/or trailer are drawn onto the image of a surrounding at least in the direction of travel. The direction of travel is the intended driving direction, which may be determined by a current gear selected, a driver input or a self-driving system setting the direction of travel for a given target.

The at least one outer point of a contour is at least one point prone to collisions due to its outer position. The respective calculation of its future positions may be based on a direct calculation for such point or an indirect calculation of future positions of another point transferred to future positions of the respective outer point of a contour based on a predetermined positional relationship between the points. If future positions of more than one outer point of the contour are subject to be calculated, such indirect calculation may reduce required capacities.

Preferably, the method displays or draws, respectively, at least the calculated future positions of the at least one trailer on the image at least in the event of the direction of travel is a rearward direction, since the at least one trailer is the first object prone to collisions in such direction of travel. Further, irrespective of the direction of travel, the at least one trailer may be the object providing the relevant contour with respect to collisions. In other words, if the at least one trailer does not provide any future position resulting in a collision, the towing vehicle may implicitly also be assumed as not prone to a collision. For a direction of travel in the forward direction, the trailer may be assumed as representative of potential collisions. However, in a default mode the method may display both, the future positions of the towing vehicle and the at least one trailer. The displaying of future positions of the at least one trailer may also depend on a recognition of at least one trailer being towed by the towing vehicle. The method may also comprise the ability to select the future positions to be displayed on the image, for example, the future positions of the towing vehicle or the at least one trailer, and/or the area on the image the future positions are displayed.

The vehicle combination is not limited to one trailer but may also comprise a plurality of trailers towed by the towing vehicle, for example, in the event of road trains. With respect to a plurality of trailers, the future positions of at least the last one trailer, i.e., the trailer being most distant from the towing vehicle, may be displayed. However, future positions of at least one outer point of a contour of another trailer representative of potential collisions, a combination of trailers or all trailers may be displayed.

Displaying the calculated future positions of the towing vehicle and/or at least one trailer on the image is a representation of such future positions in terms of mapping or superimposing the future positions on respective positions on the image. The image may be camera image and/or may be created based on GPS data as example of a position tracking combined with road data, for example, data on buildings, obstacles like lampposts, traffic data or the like at a current location in the surrounding.

The image of a surrounding of the towing vehicle and/or the at least one trailer may be a static image showing a one-time situation or a dynamic image that changes over the travelling distance, for example, a video. The coverage of the surrounding by the image may be a predetermined area with respect to a cover a predetermined travel distance of the towing vehicle and the at least one trailer, respectively. In other words, the image may cover at least a minimum area of potential collisions with respect to calculated future positions.

In some embodiments, the step of calculating future positions of at least one outer point of the contour of the towing vehicle comprises the calculation of future positions of at least one corner point of the chassis of the towing vehicle, preferably at least two corner points of the chassis of the towing vehicle, more preferably at least two corner points of the chassis of the towing vehicle on one side of the towing vehicle in parallel to the direction of travel.

Accordingly, assuming the towing vehicle being of a substantially rectangular shape, a corner point of the chassis of the towing vehicle is a representative outer point of a contour of the towing vehicle. For example, assuming a direction of travel in the forward direction on a one-lane road with the critical side with respect to collisions being on the driver's side, it may be sufficient to calculate future positions of the front corner point with respect to the direction of travel on the driver's side. However, since the chassis may be of an irregular shape, at least a deviation form a rectangular shape, calculations of future positions of the towing vehicle may comprise the calculation of future positions of at least two corner points of the chassis of the towing vehicle. With respect to the driver's side of the towing vehicle being the critical side with respect to collisions, the calculation of future positions of the towing vehicle may comprise at least the two corner points of the chassis of the towing vehicle on the driver's side as the one side of the towing vehicle in parallel to the direction of travel in such scenario. However, the calculation may also be directed to the calculation of the front corner points of the chassis of the towing vehicle with respect to the direction of travel as being assumed as representative for potential collisions.

In some embodiments, the step of calculating future positions of at least one outer point of the contour of the at least one trailer comprises the calculation of future positions of at least one corner point of the chassis of the at least one trailer, preferably at least two corner points of the chassis of the at least one trailer, more preferably at least two corner points of the chassis of the at least one trailer on one side of the at least one trailer in parallel to the direction of travel.

Here, the calculation of future positions of corner points of the chassis of the at least one trailer may be carried out analogously to the calculation of future positions of corner points of the chassis of the towing vehicle as described above.

In some embodiments, the method further comprises the step of generating a tractrix of the future positions of at least one outer point of the contour of the towing vehicle based on the calculated future positions of at least one corner point of the chassis of the towing vehicle to be displayed on the image.

Accordingly, the calculated future positions of at least one outer point of the contour of the towing vehicle are displayed on the image as a continuous line instead of displaying individual points. For example, the tractrix of future positions of an outer point of the contour of the towing vehicle may be generated by interpolation between future positions.

In some embodiments, the method further comprises the step of generating a tractrix of the future positions of at least one outer point of the contour of the at least one trailer based on the calculated future positions of at least one corner point of the chassis of the at least one trailer to be displayed on the image.

Here, the displaying of the tractrix of the future positions of at least one outer point of the contour of the at least one trailer may be carried out analogously to the respective displaying of the tractrix of future positions of an outer point of the contour of the towing vehicle as per the above.

In some embodiments, the step of displaying the calculated future positions of the towing vehicle and/or the at least one trailer on the image is performed in response to a trigger event, preferably based on a selection of a gear and/or a velocity of the vehicle combination below a predetermined velocity.

For example, displaying the calculated future positions of the towing vehicle and/or the at least one trailer may be carried out when shifting into reverse gear. Alternatively or in addition, displaying the calculated future positions of the towing vehicle and/or the at least one trailer may be carried out if the velocity of the vehicle combination falls below a predetermined velocity representative of a parking manoeuvre or other driving manoeuvre prone to collisions.

In some embodiments, the future positions of the calculated future positions of the towing vehicle and the at least one trailer on the image are displayed by different indicators, preferably different in color and/or shape.

The difference in color and/or shape may support a better overview, specifically in view of multiple future positions to be displayed. The difference in shape may comprise different graphical symbols and/or the use of different line characteristics with respect to displaying tractrices, for example, the use of solid lines and dotted lines and/or the use of different line thicknesses.

In some embodiments, the method further comprises the step of generating a collision notification and/or the step of adapting the steering angle by detecting an intersection of future positions of the towing vehicle and/or the at least one trailer with an object on the image, wherein the collision notification preferably provides an acoustic, optic and/or tactile alarm.

Accordingly, the method may not only provide a visual representation on calculated future positions of at least one outer point of the contour of the towing vehicle and/or the at least one trailer on the image but also a collision notification and/or a correction of the steering angle to avoid a respective collision. For example, an image processing unit may be configured to identify objects the towing vehicle and/or at least one trailer could collide with and determines a collision in the event of at least one future position of the towing vehicle and/or the at least one trailer intersecting with the object or being otherwise representative of a collision with the object. In the event of such potential collision, a collision notification, for example, a collision alarm is generated. The collision notification may be an acoustic signal, which may be different in sound or repetition the closer the potential collision is approaching. Alternatively or in addition, the collision notification may be an optical signal such as a highlighting the intersection, a flashing of the object and/or the respective calculated future position, and/or a collision information message. The optical signal may also be different in its characteristic depending on the distance of the vehicle combination to the object. Further, alternatively or in addition, a tactile signal may be generated to increase the attention of a driver with respect to a potential collision.

Alternatively or in addition to generating a collision notification, the steering angle of the towing vehicle and thereby the articulation angle of the at least one trailer may be adapted by the driver or a self-driving system to avoid the collision. For example, a self-driving system may calculate a steering angle of the towing vehicle without providing a potential collision with an object in the direction of travel and/or over a required distance for a driving manoeuvre in the direction of travel, and may adapt the steering angle accordingly. The method may also include stopping of the vehicle combination in the event of an identified collision. The stopping may be performed directly after the detection of a potential collision or in a predetermined distance to the object affected from the potential collision. The stopping in a predetermined distance provides the advantage of the vehicle combination being still able to carry out a driving manoeuvre which may not require a travel distance reaching the object. In other words, with a predetermined distance being, for example, a minimum distance to avoid a collision, the vehicle combination may still execute a driving manoeuvre without being stopped as long as the distance to an object is not reaching the predetermined distance.

In some embodiments, the step of displaying an image of a surrounding of at least the towing vehicle and/or the at least one trailer is performed by recording at least one image by at least one imaging device arranged on the at least one trailer.

Since the trailer may be assumed as the significant vehicle of the vehicle combination with respect to a collision in view of its size and/or as being the first vehicle facing an object in the direction of travel being a rearward direction, the imaging device on the at least one trailer may allow an unobstructed view of the relevant surrounding of the at least one trailer. In other words, an imaging device on the towing vehicle may not provide a sufficient view of the surrounding of the trailer, since the trailer itself may obstruct the view on its surrounding. However, an imaging device may alternatively or in addition be arranged on the towing vehicle to provide image information for any trailer towed by the towing vehicle without the need to equip any trailer with an imaging device. The imaging device may be any kind of camera suitable to provide a static or dynamic image for representing a surrounding of the towing vehicle and/or the at least one trailer. The imaging device may be controllable to provide different viewing angles and/or imaging characteristics, for example, to be adaptable in brightness, contrast and the like as per different imaging device settings. The image displayed may be an image constructed from images of different imaging devices, for example, an image of an imaging device of the at least one trailer combined with an image of the towing vehicle to provide a greater area allowed to be displayed. The displayed image may also be changed to display an image of an imaging device or combination of imaging devices different from another imaging device or combination of imaging devices. For example, the displayed image may be an image of an imaging device of the towing vehicle for a direction of travel in the forward direction and an image of an imaging device of the at least one trailer for a direction of travel in the rearward direction.

In some embodiments, the step of determining the current steering angle of the towing vehicle and/or determining the current articulation angle of the at least one trailer is performed by detecting and/or estimating the current steering angle and/or articulation angle.

For example, the current steering angle and/or the current articulation angle may be determined by measuring using a steering angle sensor and/or an articulation angle sensor, respectively. The determination of the current steering angle and/or the current articulation angle may, alternatively or in addition, be based on an image processing of an image of the towing vehicle and/or trailer with respect to reference points or the like.

As another example, a method for estimating an articulation angle between a towing vehicle and a trailer with respect to a pivot, comprises the steps of:

determining a distance between an instantaneous center of velocity of the towing vehicle and a center of at least one axle of the towing vehicle representative for a rotation of the towing vehicle about the instantaneous center of velocity of the towing vehicle and/or a distance between an instantaneous center of velocity of the trailer and a center of at least one axle of the trailer representative for a rotation of the trailer about the instantaneous center of velocity of the trailer, determining at least one instantaneous speed representative for a wheel speed of at least one wheel of the towing vehicle and/or the trailer, wherein the at least one instantaneous speed refers to the at least one determined distance, and estimating the articulation angle based on the at least one determined instantaneous speed and the at least one determined distance.

With respect to the above the articulation angle is rather determined by an estimation of the articulation angle based on wheel speeds than by a direct measurement of the articulation angle by an articulation angle sensor. Specifically, wheel speeds of representatives thereof may be determined by already implemented sensors. For example, wheel speed sensors implemented with respect to a brake control or the like may be used to provide data for an estimation of the articulation angle. In other words, articulation angle sensors for a direct measurement may be omitted. However, articulation sensors may still be used in parallel, e.g. for calibration purposes and/or plausibility checks.

The towing vehicle may be a truck towing the trailer such as a semi-trailer or a central axis trailer. However, the towing vehicle may also be a towing trailer towing the trailer within a vehicle combination of a truck and several trailers. In such configuration the articulation angle between the truck towing the towing trailer and/or the articulation angle between the towing trailer and the trailer may be estimated. The articulation angle is estimated with respect to a pivot representative of the relative rotational movement between the towing vehicle and the trailer, e.g. a kingpin. If a steering angle is applied to a vehicle combination of at least one towing vehicle and at least one trailer, any of the towing vehicle and trailer represents a rotating rigid body having a point as so-called "Instantaneous Center of Velocity", hereinafter also referred to as "ICV". Each of the rigid bodies rotates around its respective ICV. Accordingly, when a vehicle, i.e. the towing vehicle and/or the trailer, turns, e.g. in response to a steering angle, it turns around its ICV at such moment in time. The ICV of the towing vehicle is different from the ICV of the trailer. Further, the distance between the respective ICV and a respective wheel of the vehicle is proportional to the magnitude of the wheel speed. Consequently, if the wheel speeds of a vehicle are known, the ICV associated with the vehicle can be determined to deduce the amount of cornering to estimate the articulation angle between the towing vehicle and the trailer. In other words, the estimation of the articulation angle between the towing vehicle and the trailer with respect to the pivot is based on the wheel speed(s) of the towing vehicle and/or the trailer as time varying signals.

In some embodiments, the at least one instantaneous speed is determined for at least one non-steered axle of the towing vehicle, preferably as speed of the center of at least one rear axle of the towing vehicle, and/or for at least one non-steered axle of the trailer, preferably as speed of the center of at least one rear axle or as speed of at least one wheel of at least one rear axle of the trailer.

In other words, the estimation of the articulation angle between the towing vehicle and the trailer with respect to the pivot is based on the wheel speed(s) of the towing vehicle on the non-steered axle(s) and/or the wheel speed(s) of the trailer on the non-steered axle(s), e.g. non dolly axles.

In some embodiments, the distance between the instantaneous center of velocity of the towing vehicle and the center of at least one axle of the towing vehicle is calculated, preferably based on a distance between a steering axle, preferably a front axle, of the towing vehicle, and a non-steering axle, preferably a rear axle, of the towing vehicle, and a steering angle of the steering axle.

Accordingly, the determination of the distance between the instantaneous center of velocity of the towing vehicle and the center of at least one axle of the towing vehicle is determined by being calculated. Alternatively, the distance between the instantaneous center of velocity of the towing vehicle and the center of at least one axle of the towing vehicle may be stored in a database in dependence of a steering angle.

Specifically, the distance between the instantaneous center of velocity of the towing vehicle and the center of at least one axle of the towing vehicle may be calculated based on a distance between a steering axle, such as a front axle, of the towing vehicle and a non-steering axle, such as a rear axle, of the towing vehicle, and a steering angle of the steering axle. The distance between the steering axle and the non-steering axle of the towing vehicle may be input data or data provided by a database as available geometric input data of the towing vehicle. The steering angle may be provided by a direct or indirect determination, e.g. to be measured by a sensor or as per a steering command by an automatic driving system. Consequently, the estimation of the articulation angle between the towing vehicle and the trailer with respect to the pivot is based on the wheel speed(s) of the towing vehicle and/or the trailer and the steering angle of the steering axle as time varying signals.

Preferably, the distance between the instantaneous center of velocity of the towing vehicle and the center of at least one axle of the towing vehicle is calculated by

$$r = {}^{b}\!/_{\tan(\vartheta)} \qquad \text{(equation (1))},$$

wherein r is the distance between the instantaneous center of velocity of the towing vehicle and the center of at least one axle of the towing vehicle, b is the distance between the steering axle of the towing vehicle and the non-steering axle of the towing vehicle, and $\vartheta$ is the steering angle.

Accordingly, the estimation of the articulation angle may be based on the steering angle in accordance with a steering action. The steering angle refers to the steering action on the steering axle, e.g. the front axle or at least one of the front axles of the towing vehicle.

In some embodiments, the distance between the instantaneous center of velocity of the trailer and the center of at least one axle of the trailer is calculated, preferably based on a distance between a center of at least one wheel on the at least one axle of the trailer facing towards the instantaneous center of velocity of the trailer and a distance between the center of the at least one wheel on the at least one axle facing towards the instantaneous center of velocity of the trailer and at least one wheel on the other side of the at least one axle.

Preferably, the distance between the instantaneous center of velocity of the trailer and the center of at least one axle of the trailer is calculated by

$$r_T = r_0 + {}^W\!/_2 \qquad\qquad \text{(equation (2))},$$

wherein $r_0$ is preferably defined by

$$r_0 = w \cdot \frac{min(v_{TL}, v_{TR})}{abs(v_{TL} - v_{TR})} \qquad\qquad \text{(equation (3))},$$

wherein $v_{TL}$ is the speed of wheel(s) of the at least one axle facing towards the instantaneous center of velocity of the trailer and $v_{TR}$ is the speed of wheel(s) of at least one axle facing away from the instantaneous center of velocity of the trailer.

In other words, the estimation of the articulation angle may be based on the wheel speed(s) of the trailer on both sides on the same axis.

In some embodiments, the method further comprises a determination of an angle of a velocity vector of the pivot and the velocity vector of the at least one axle of the towing vehicle, preferably calculated by

$$\varepsilon = \tan^{-1}\left(\frac{c}{r}\right) \qquad\qquad \text{(equation (4))},$$

wherein c is defined as distance between the center of at least one axle of the towing vehicle and the pivot.

Accordingly, the angle of a velocity vector of the pivot and the velocity vector of the at least one axle of the towing vehicle may be calculated based geometric data of the towing vehicle, i.e. the distance between the center of at least one axle of the towing vehicle and the pivot, and the distance between the instantaneous center of velocity of the towing vehicle and the center of at least one axle of the towing vehicle, which may be also calculated based on geometric data, i.e. the distance between the steering axle of the towing vehicle and the non-steering axle of the towing vehicle, and the steering angle.

Preferably, the articulation angle is estimated by

$$\varphi = \cos^{-1}\left(\frac{v_T}{v_K}\right) - \varepsilon \qquad\qquad \text{(equation (5))},$$

wherein $v_T$ is defined as speed of the center of at least one axle of the trailer, $v_K$ is defined as speed of the center of the pivot, preferably calculated by

$$v_K = {}^{v_R}\!/_{\cos(\varepsilon)} \qquad\qquad \text{(equation (6))},$$

and the ratio between the speeds of the center of the at least one rear axle of the trailer and the center of the pivot is expressed by

$$\frac{v_T}{v_K} = \cos(\varepsilon + \varphi) \qquad\qquad \text{(equation (7))},$$

According to equation (5), the articulation angle may be estimated in dependence of the angle of a velocity vector of the pivot and the velocity vector of the at least one axle of the towing vehicle, which may be calculated based on equation (4), and the ratio between the speeds of the center of the at least one rear axle of the trailer and the center of the pivot as per equation (7). Consequently, the estimation of the articulation angle may only depend on the geometric data of the towing vehicle, e.g. the distance between the front and the rear axle and the distance between the rear axle and the pivot, the instantaneous steering angle and the respective wheel speeds of the center of rear axles of the towing vehicle and the center of rear axles of the trailer.

Alternatively, the articulation angle is estimated by

$$\varphi = \tan^{-1}\left(\frac{L}{r_T}\right) - \varepsilon \qquad \text{(equation (8)),}$$

wherein L is defined as distance between the at least one axle of the trailer and the pivot.

Here, the term $\cos^{-1}\left(\frac{v_T}{v_K}\right)$ is replaced by $\tan^{-1}\left(\frac{L}{r_T}\right)$, which allows the articulation angle to be estimated based on the geometric data of the trailer, e.g. the distance between the pivot and the rear axle of the trailer and the distance between the left and right wheels of the rear axle of the trailer, the instantaneous steering angle and the respective wheel speeds of the left and the right wheel of the trailer.

The method for estimation the articulation angle may also comprise the estimation of the articulation angle as per equation (7) and equation (8) in parallel, for example, for a plausibility check and/or to proceed further with the estimated articulation angle indicated a higher risk under given driving conditions. Accordingly, the security lever may be enhanced and/or failures of the wheel speed sensors may be detected.

In some embodiments, the articulation angle is estimated by

$$\varphi = \tan^{-1}\left(\frac{L}{r_T}\right) \qquad \text{(equation (9)),}$$

wherein L is defined as distance between the at least one axle of the trailer and the pivot.

Equation (9) is a simplification of equation (8) with $\varepsilon$ being set to $\varepsilon = 0$ as to be neglected. By such approach, the articulation angle can be estimated without any data of the towing vehicle, i.e. geometric data, wheel speeds or the steering angle of the towing vehicle. The simplification may only be applied under predetermined operating conditions of the towing vehicle and trailer combination, e.g. in dependence of a driving speed, road conditions and/or steering angle. Further, as per the above, the estimation as per equation (9) may also be used in parallel to the estimation as per equation (7) and/or equation (8). In principle, any estimation of the articulation angle by at least two of the equations (7) to (9) may only be performed at predetermined timings, for example, in dependence of predetermined operating conditions, regular intervals as interim checks or the like.

The estimation of the articulation angle between a towing vehicle and a trailer with respect to a pivot may be carried out by a device executing the method as described above. The device comprises a data unit configured to receive and/or store data of the distance between the steering axle, preferably a front axle, of the towing vehicle and a non-steering axle, preferably a rear axle, of the towing vehicle, the distance between the non-steering axle of the towing vehicle and the pivot, the distance between the at least one axle of the trailer and the pivot, and/or the distance between the center of the at least one wheel on the at least one axle facing towards the instantaneous center of velocity of the trailer and at least one wheel on the other side of the at least one axle. The device further comprises a determination unit configured to determine the steering angle of the steering axle, the speed of the center of at least one axle of the towing vehicle, the speed of the center of at least one axle of the trailer, and/or the speed of at least one wheel of at least one rear axle of the trailer, preferably the speeds of opposing wheels of the at least one axle with respect to the center of the at least one axle. Additionally, the device comprises an estimation unit configured to determine the distance between the instantaneous center of velocity of the towing vehicle and the center of at least one axle of the towing vehicle representative for a rotation of the towing vehicle about the instantaneous center of velocity of the towing vehicle, the distance between the instantaneous center of velocity of the trailer and the center of at least one axle of the trailer representative for a rotation of the trailer about the instantaneous center of velocity of the trailer, the speed of the center of the pivot, the angle of the velocity vector of the pivot and the velocity vector of the at least one axle of the towing vehicle, and/or the ratio between the speeds of the center of the at least one rear axle of the trailer and the center of the pivot to estimate the articulation angle, and an output unit configured to output the articulation angle.

For example, the data unit is configured to receive and/or store the geometric data of the towing vehicle and/or the trailer required to estimate the articulation angle as per equation (7), equation (8) and/or equation (9). Similarly, the determination unit is configured to determine the steering angle and/or the respective wheel speeds required to estimate the articulation angle as per equation (7), equation (8) and/or equation (9). Accordingly, the determination unit receives respective wheel speed sensor signals or comprises such sensors. The estimation unit is configured to receive the required data by the data unit and the determination unit to determine the variables required to estimate the articulation angle as per equation (7), equation (8) and/or equation (9) based on the data of the data unit and the determination unit to estimate the articulation angle. The output unit may be configured to output the estimated articulation angle for further processing by a driving assistance system to take measures in response to the estimated articulation angle, e.g. to avoid critical articulation angles. Alternatively or in addition, the output device may be configured to provide an optical, acoustic and/or tactile output representative of the estimated articulation angle. As an example, the estimated articulation angle may be displayed to an operator of the towing vehicle.

Any kind of output by the output device may depend on the instantaneous estimated articulation angle. For example, if the articulation angle is below a predetermined value, the estimated articulation angle is output to the driving assistance device to be considered for further assistance to the extent required. However, if the estimated articulation angle exceeds the predetermined value, the estimated articulated angle may also be displayed to an operator of the towing vehicle and/or a supervising control architecture. Upon further exceeding the predetermined value over a predetermined period in time and/or a critical value, an acoustic alarm and/or red light may be added. The predetermined and/or critical value may be adaptable to different driving operations and/or boundary conditions such as road conditions.

The data unit, the determination unit, the estimation unit and the output unit do not have to be separated entities but may only be represented as different operators of a processor or the like.

In some embodiments, the estimation unit is or comprises a calculation unit to calculate the at least one of the distance between the instantaneous center of velocity of the towing vehicle and the center of at least one axle of the towing vehicle representative for a rotation of the towing vehicle about the instantaneous center of velocity of the towing vehicle, the distance between the instantaneous center of velocity of the trailer and the center of at least one axle of the trailer representative for a rotation of the trailer about the instantaneous center of velocity of the trailer, the speed of the center of the pivot, the angle of the velocity vector of the pivot and the velocity vector of the at least one axle of the towing vehicle, and/or the ratio between the speeds of the center of the at least one rear axle of the trailer and the center of the pivot.

Accordingly, the estimation unit is configured to calculate the required variables to estimate the articulation angle. Due to the calculation ability, the estimation unit may not require storage means for data basis to assign an estimated articulation angle to any parameter combination provided by the data unit and the determination unit but allows the use of an algorithm instead. However, the estimation unit may still use some stored articulation angles in response to a parameter combination provided by the data unit and the determination unit in addition, e.g. for plausibility checks and failure analysis, or alternatively, e.g. if available and otherwise to be calculated.

The device for estimating an articulation angle between a towing vehicle and a trailer with respect to a pivot as described above may be comprised by a driving assistance system for a towing vehicle.

By receiving the estimated articulation angle, the driving assistance system may be able to take respective countermeasures depending on the estimated articulation angle or ranges thereof. For example, the driving assistance system may be configured to restrict the speed, accelerations or decelerations and/or steering angles of the towing vehicle or may completely stop the towing vehicle. The consideration of the estimated articulation angle may be preferably advantageous in driving assistance systems for autonomous driving operations.

The device for estimating an articulation angle between a towing vehicle and a trailer with respect to a pivot as described above and/or the driving assistance system as described above may be comprised by a commercial vehicle.

The method for estimating an articulation angle between a towing vehicle and a trailer with respect to a pivot as described above may be implemented by a computer program product comprising a program code stored on a machine-readable medium for executing the method.

The program code stored is preferably executed on a data processing unit of the device for estimating an articulation angle between a towing vehicle and a trailer with respect to a pivot as described above.

In some embodiments, the image of a surrounding of at least the towing vehicle and/or the at least one trailer is an image in a bird's eye perspective or an image providing a view in the at least one direction of travel.

The image of the surrounding may be selectable by a driver to be represented in the bird's eye perspective or in view in the at least one direction of travel, for example, according to individual preferences or the intended driving manoeuvre. Displaying the image of the surrounding in a bird's eye perspective may allow the alternative or additional use of imaging devices of the surrounding, i.e., at least one image device not arranged on the towing vehicle or the at least one trailer.

In some embodiments, the displaying of an image of a surrounding of at least the towing vehicle and/or the at least one trailer in the at least one direction of travel of the towing vehicle and/or the at least one trailer showing the calculated future positions of the towing vehicle and/or the at least one trailer on the image is adaptable, preferably in magnification.

As previously described, an imaging device may be configured to be adaptable with respect to its viewing angle and/or recording settings. Alternatively or in addition, the display settings may be adapted to allow images to be displayed to be selected from at least one of a plurality of imaging devices, to select a specific image detail to be displayed, and/or to adapt the image representation in brightness, contrast, magnification or the like. Adapting the magnification of the image as per respective image device setting and/or display setting may allow to focus on potential locations prone to a collision.

For example, the magnification may be increased when the vehicle combination is approaching a location of potential collision with an object.

In another aspect, the present invention relates to a computer program product comprising instructions which, when the program is executed by a computer, cause the computer to carry out the method as described.

The instructions are preferably executed on a data processing unit of a device for avoiding collisions as per the method as described above.

In another aspect, the present invention relates to a computer-readable medium comprising instructions which, when the program is executed by a computer, cause the computer to carry out the method as described.

The computer-readable medium is provided for or connected to a data processing unit of a device for avoiding collisions as per the method as described above.

In another aspect, the present invention relates to a vehicle for a vehicle combination of a towing vehicle and at least one trailer towed by the towing vehicle, wherein the vehicle comprises

an image device configured to record and/or configured to receive at least one image of a surrounding of at least the towing vehicle and/or the at least one trailer in at least one direction of travel of the towing vehicle and/or the at least one trailer,

a determination device configured to determine and/or receive determined information on a steering angle of the towing vehicle and/or the articulation angle of the at least one trailer,

a future position device configured to calculate and/or to receive calculated information on future positions of at least one outer point of the contour of the towing vehicle in at least one direction of travel of the towing vehicle based on the current steering angle and/or future positions of at least one outer point of the contour of the at least one trailer in at least one direction of travel of the at least one trailer based on the current articulation angle, and

a display device configured to display the at least one image together with the calculated future positions of the towing vehicle and/or the at least one trailer on the image.

The image device, the determination device, the future position device and/or the display device may not need to be different devices but may be comprised by one collision detection device or collision detection system. However, in a preferred configuration with respect to a collision avoidance relevant for a driver, the display device is arranged in the driver's cabin with at least the imaging being arranged on the towing vehicle and/or the at least one trailer.

For example, the vehicle is a trailer, preferably a semi-trailer, a drawbar trailer, central axle trailer of another type of trailer.

In principle, any feature described with respect to the method is also applicable to the vehicle and vice versa. Accordingly, any structural feature may also comprise a functional effect as feature of the method, while any functional feature of the method may be implemented in the vehicle by respective device means.

Further advantages, aspects and details of the present invention are subject to the claims, the following description of exemplary embodiments applying the principles of the invention, and the respective exemplary drawings.

**Figure 1** is a flow chart of a method for avoiding collisions according to a first exemplary embodiment of the present invention;

**Figure 2** is a flow chart of a method for avoiding collisions according to a second exemplary embodiment of the present invention;

**Figure 3** is a top view on a towing vehicle and a trailer attached thereto showing different data applicable for an estimation of the articulation angle between the towing vehicle and the trailer with respect to a pivot;

**Figure 4** is a diagram showing the geometric relationships between speed vectors and angles, respectively;

**Figure 5** is an enlarged view of a rear axle portion of the trailer and respective geometric ratios;

**Figure 6** is a schematic lateral view on a vehicle according to an exemplary embodiment of the present invention;

**Figure 7** is a view on an image of a surrounding of a towing vehicle and a trailer and displaying tractrices of the towing vehicle and the trailer for a forward direction of travel in a bird's eye perspective;

**Figure 8** is a view on an image of a surrounding of a towing vehicle and a trailer and displaying tractrices of the towing vehicle and the trailer for a reverse direction of travel in a bird's eye perspective; and

Figure 9 is a view on an image of a surrounding of a trailer and displaying tractrices of the trailer for a reverse direction of travel in a view in the direction of travel.

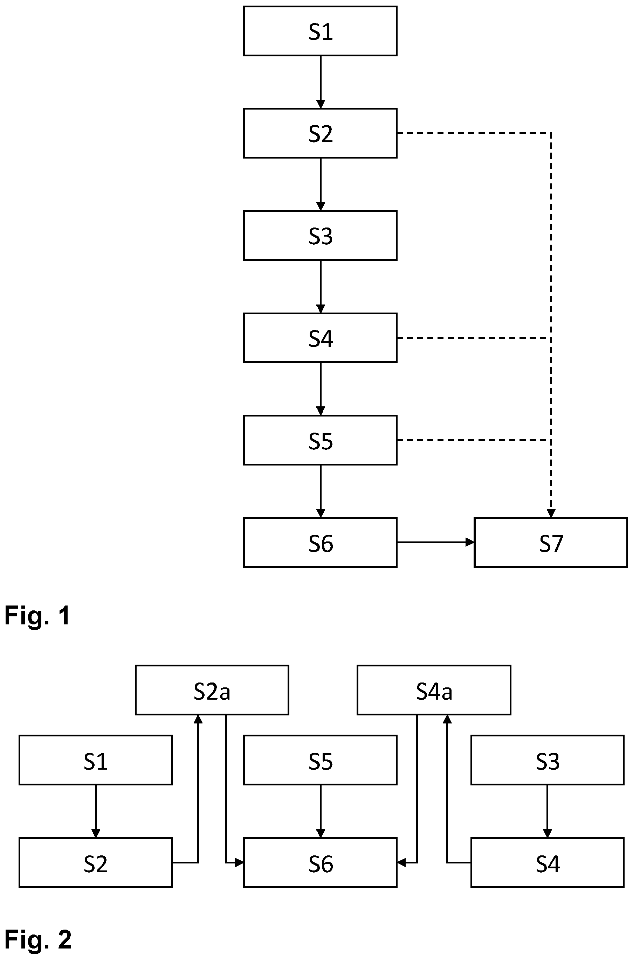

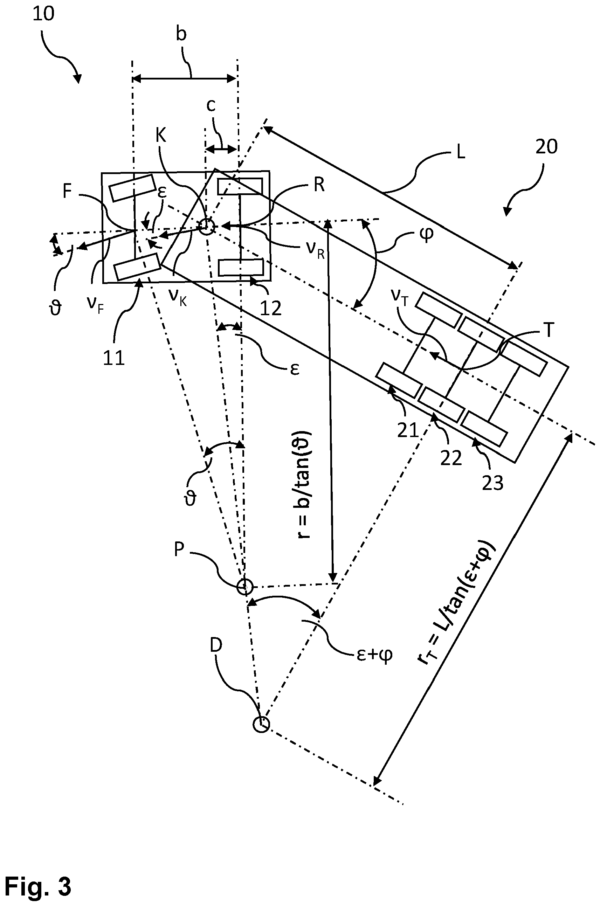

Figure 1 shows a flow chart of a method for avoiding collisions according to a first exemplary embodiment of the present invention. In step S1, a current steering angle $\vartheta$ of a towing vehicle 10 (Fig. 3) of a vehicle combination of the towing vehicle 10 and a trailer 20 (Fig. 3) towed by the towing vehicle 10 is determined. In the exemplary embodiment, the current steering angle $\vartheta$ is determined by a steering angle sensor. However, in other embodiments, the steering angle $\vartheta$ may be determined or estimated differently, for example, in accordance with a steering command of a self-driving system.

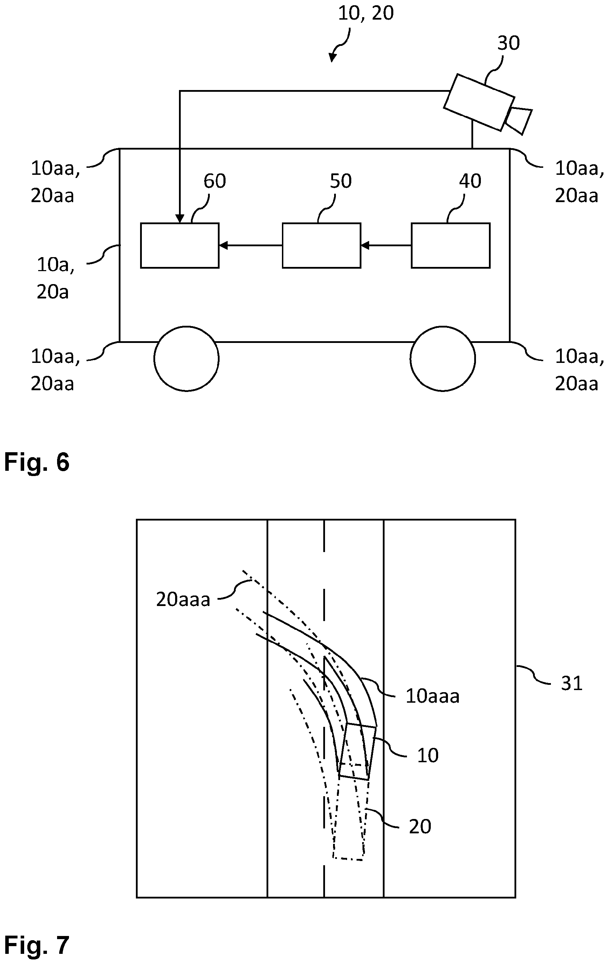

In step S2, future positions of at least one outer point 10aa (Fig. 6) of the contour of the towing vehicle 10 are calculated with respect to the current steering angle $\vartheta$. In concrete, according to the present exemplary embodiment, the future positions of the four corner points 10aa with respect to a top view on the towing vehicle 10 are calculated, since the towing vehicle 10 is assumed as being of a rectangular shape. Due to the rectangular shape of the towing vehicle 10, the four corner points 10aa at the bottom of the towing vehicle 10 do not provide any significant additional information with respect to a collision. However, in other embodiments with a towing vehicle 10 of irregular shape, the calculation of future positions of at least one outer point 10aa of a contour of the towing vehicle or the selection of such outer points 10aa for calculating future positions thereof may depend on critical points with respect to a collision. The determination of critical points may also depend on the shape of an object prone to a collision, in particular on a specific height associated with a conflicting contour portion.

In step S3, a current articulation angle $\varphi$ of the trailer 20 (Fig. 3) is determined. In the present embodiment, the articulation angle $\varphi$ is determined by an estimation based on the determined steering angle $\vartheta$ as described with respect to Fig. 3 to 5. However, in other embodiments, the articulation angle $\varphi$ of the trailer may be determined differently, for example, by an articulation angle sensor.

Similar as described with respect to step 2, the future positions of at least one outer point 20aa of the contour of the at least one trailer 20 in at least one direction of travel of the at least one trailer 20 are calculated based on the current articulation angle $\varphi$ in step S4. In the exemplary embodiment, the method provides the calculation of the future positions of the four corner points 20aa with respect to a top view on the towing vehicle 20, since the trailer 20 is also assumed as being of a rectangular shape. Due to the rectangular shape of the trailer 20, the four corner points 20aa at the bottom of the trailer 20 do not provide any significant additional information with respect to a collision. However, in other embodiments with a trailer 20 of irregular shape, the calculation of future positions of at least one outer point 20aa of a contour of the trailer 20 or the selection of such outer points 20aa for calculating future positions thereof may depend on critical points with respect to a collision. The determination of critical points may also depend on the shape of an object prone to a collision, in particular on a specific height associated with a conflicting contour portion.

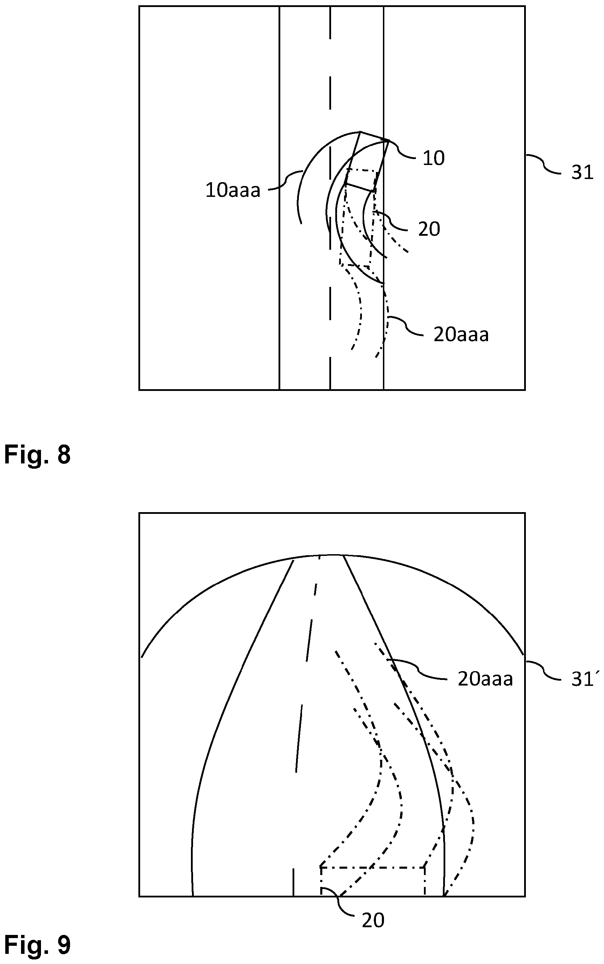

In step S5, an image 31 of a surrounding of the towing vehicle 10 and the trailer 20 (Figs. 7, 8) is displayed providing at least a portion of the surrounding in at least one direction of travel of the vehicle combination.

Further, in step S6, the calculated future positions of the towing vehicle 10 and the trailer 20, represented by future positions of the respective corner points 10aa, 20aa are displayed on the image 31. The calculated future positions of the respective corner points 10aa, 20aa are mapped on corresponding locations on the image 31.

In the exemplary embodiment, in step S7, a collision notification is generated in the event of detecting an intersection between future positions of the respective corner points 10aa, 20aa and an object. As indicated by the dashed line in Fig. 1, detection of a potential position may be directly derived from the calculated future positions of the corner points 10aa, 20aa of the towing vehicle 10 and the trailer 20 as per steps S2 and S4 and the image 31 of the surrounding as per step S5. Accordingly, in the exemplary embodiment, step S7 does not necessarily require step S6. However, in other embodiments step S7 may be based on step S6, for example, by detecting a potential collision based on image data processing with the mapped calculated future positions on the image.

Figure 2 shows a flow chart of a method for avoiding collisions according to a second exemplary embodiment of the present invention. The method according to the second exemplary embodiment differs from the first exemplary embodiment by steps S1 and S2 are performed in parallel with steps S3 and S4, and in that in a step S2a a tractrix of the calculated future positions of each corner point 10aa of the towing vehicle 10 and in step S4a a tractrix of the calculated future positions of each corner point 20aa of the trailer 20 is generated to be displayed on the image 31 in step S6.

Figure 3 shows a top view on a towing vehicle 10 and a trailer 20 attached thereto showing different data applicable for an estimation of the articulation angle $\varphi$ between the towing vehicle 10 and the trailer 20 with respect to a center of a king pin K as pivot.

The towing vehicle 10 comprises a front axle 11, which is the steering axle in the given exemplary embodiment, and a rear axle 12, which is the non-steering axle in the given exemplary embodiment. The center of the front axle 11 is denoted by K and the center of the rear axle 12 is denoted by R. Accordingly, a wheelbase as the distance b between the front axle 11 and the rear axle 12 is the distance between point F and point R. In accordance with a steering angle $\vartheta$ the direction of a vector of the speed $v_F$ of the center of the front axle 11 with respect to the point F corresponds to the steering angle $\vartheta$ of the wheels of the front axle 11 with respect to the longitudinal axis of the towing vehicle, which extends between point F and point R. Since the rear axle 12 is a non-steering axle, a vector of the speed $v_R$ of the center of the rear axle 12 with respect to the point R remains directed in the longitudinal direction of the towing vehicle 10.

The towing vehicle 10 comprises the king pin K about which the trailer 20 pivots in response to the instantaneous steering angle $\vartheta$ resulting in the articulation angle $\varphi$ between the longitudinal axis of the towing vehicle 10 and the longitudinal axis of the trailer 20, which extends between the king pin K and a center T of rear axles 21, 22, 23 of the trailer 20 to be described later. A vector of the speed $v_K$ of the center of the king pin K corresponds an angle $\varepsilon$. A distance c is the distance between the center of the kingpin K and point R in the longitudinal direction of the towing vehicle.

Upon application of the steering angle $\vartheta$, the towing vehicle 10 represents a rotating rigid body rotating about point P as instantaneous center of velocity (ICV) of the towing vehicle 10. A distance r as the distance between point P and point R can be expressed by

$$r = {b}\big/{\tan(\vartheta)} \qquad \text{(equation (1)).}$$

Accordingly, the instantaneous distance r can be determined based on the distance b between point F and point R as given input data and the instantaneous steering angle $\vartheta$.

The trailer 20 comprises a first rear axle 21, a second rear axle 22 and a third rear axle 23. The rear axles 21, 22 and 23 are represented by a point T as center of the rear axles 21, 22, 23 of the trailer 20. Since the rear axles 21, 22 and 23 are non-steering axles, a vector of the speed $v_T$ of the center of the rear axles 21, 22, 23 with respect to the point T remains directed in the longitudinal direction of the trailer 20. A distance L is the distance between the point T and the center of the king pin K in the longitudinal direction of the trailer 20.

Upon application of the steering angle $\vartheta$ on the front axle 11 of the towing vehicle 10, the trailer 20 represents a rotating rigid body rotating about point D as instantaneous center of velocity (ICV) of the trailer 20. A distance $r_T$ is the distance between point D and point T.

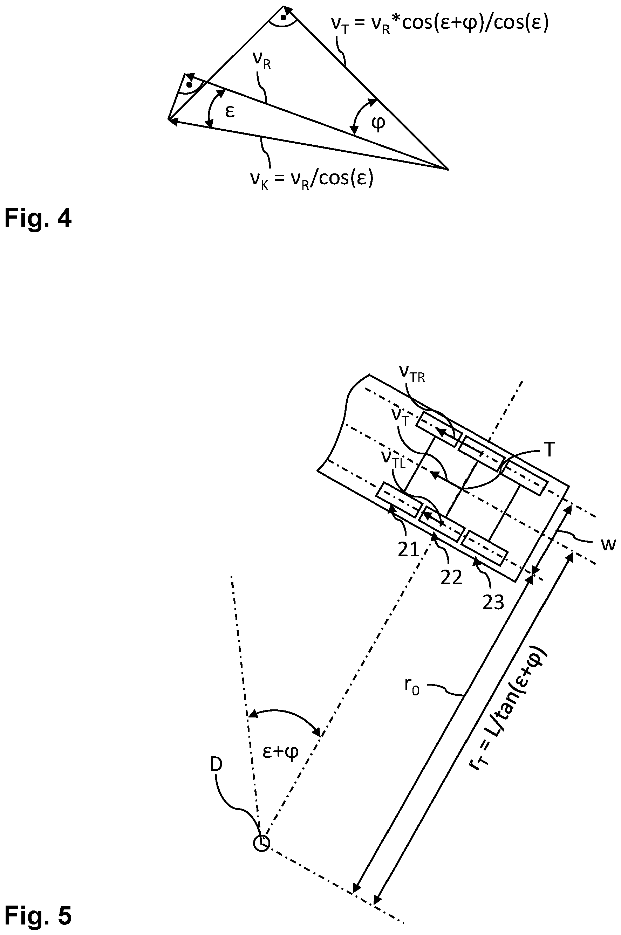

**Figure 4** is a diagram showing the geometric relationships between speed vectors $v_R$, $v_K$ and $v_T$ and angles $\varepsilon$ and $\varphi$.

As apparent from Fig. 2, the angle $\varepsilon$ is the angle between the vector of the speed $v_K$ with respect to point K and the vector of the speed $v_R$ with respect to point R and can be expressed by

$$\varepsilon = \tan^{-1}\left(\frac{c}{r}\right) \qquad \text{(equation (4)).}$$

Further, the speed $v_K$ with respect to the center of the king pin K can be calculated by

$$v_K = {v_R}\big/{\cos(\varepsilon)} \qquad \text{(equation (6)).}$$

Accordingly, the speed $v_T$ with respect to point T and the angle between $v_K$ and $v_T$ being $\varepsilon + \varphi$ can be expressed by

$$v_T = v_K \cos(\varepsilon + \varphi) = v_R \frac{\cos(\varepsilon+\varphi)}{\cos(\varepsilon)} = {v_R \cos(\varepsilon + \varphi)}\big/{\cos(\varepsilon)} \qquad \text{(equation (10)).}$$

**Figure 5** shows an enlarged view of a rear axle portion of the trailer and respective geometric ratios. In concrete, the rear part of the trailer 20 comprising the rear axles 21, 22, 23 is shown.

Each of the rear axles 21, 22, 23 of the trailer 20 comprises a left wheel as wheel facing towards the instantaneous center of velocity D, and a right wheel as wheel facing away from the instantaneous center of velocity D. Even though the exemplary embodiment shows only one left and one right wheel per axle, each of the axles may provide more than one left and/or right wheel, which may be represented by one left or right wheel in Fig. 3.

A distance between point D as instantaneous center of velocity of the trailer 20 and each wheel of the rear axles 21, 22, 23 is proportional to the wheel speed of such wheels. For example, if the trailer 20 turns to the left, the following equation may be used:

$$\frac{v_{TL}}{r_0} = \frac{v_{TR}}{r_0+w} \qquad \text{(equation (11)),}$$

wherein $v_{TL}$ is the speed of the left wheel, $v_{TR}$ the speed of the right wheel, $r_0$ the distance between the point D as instantaneous center of velocity of the trailer 20 and the left wheel and w is the distance between the left and the right wheel.

Accordingly, the distance $r_0$ can by expressed by

$$r_0 = w \cdot \frac{min(v_{TL}, v_{TR})}{abs(v_{TL} - v_{TR})} \qquad \text{(equation (3))},$$

Further, the distance $r_T$ between point D as instantaneous center of velocity of the trailer 20 and point T can be expressed by

$$r_T = r_0 + {}^W\!/_2 \qquad \text{(equation (2))},$$

In accordance with the geometric relationships and speeds $v_F$, $v_R$, $v_K$ and $v_T$ or $v_{TL}$ and $v_{TR}$, respectively, representative of respective wheel speeds, the articulation angle $\varphi$ between the respective longitudinal axes of the towing vehicle 10 and the trailer 20 with respect to the center of the king pin K as pivot can be estimated based on the geometric data and instantaneous wheel speeds. In the following, exemplary embodiments of respective methods are presented.

According to a first exemplary embodiment of the method for estimating the articulation angle $\varphi$, the method uses the geometric data of the towing vehicle 10, here the distance b between the front axle 11 and the rear axle 12, and the distance c between the rear axle 12 and the center of the king pin K, the instantaneous steering angle $\vartheta$, the speed $v_R$ of the center of the rear axle 12 of the towing vehicle with respect to point R, and the speed $v_T$ of the center of the rear axles 21, 22, 23 of the trailer 20 with respect to point T as input data. In principle, the geometric data may be provided by a database to be selected according to the specific towing vehicle 10 and trailer 20 as preset and/or as constant preset. The steering angle $\vartheta$ may be provided in accordance with a control signal causing the steering and/or by respective sensor data. The speeds $v_R$ and $v_T$ may also be estimated in accordance with respective control signals with respect to a driving speed, acceleration or deceleration, and/or by a sensor signals, for example by direct measurements or indirect measurements representative of the speeds $v_R$ and/or $v_T$.

Based on the distance b between the front axle 11 and the rear axle 12 of the towing vehicle 10 and the instantaneous steering angle $\vartheta$, the distance r between point P as instantaneous center of velocity of the towing vehicle 10 and the rear axle 12 of the towing vehicle 10 is calculated by equation (1), i.e.

$$r = {}^b\!/_{\tan(\vartheta)} \qquad \text{(equation (1))}.$$

Further, the angle $\varepsilon$ between the vectors of the speed $v_R$ of the center of the rear axle 12 of the towing vehicle 10 and the speed $v_K$ of the center of the kingpin K is calculated by equation (4), i.e.

$$\varepsilon = \tan^{-1}\left(\frac{c}{r}\right) \qquad \text{(equation (4))}.$$

According to the available data, the speed $v_K$ of the center of the king pin K is calculated by equation (6), i.e.

$$v_K = {}^{v_R}\!/_{\cos(\varepsilon)} \qquad \text{(equation (6))}.$$

However, the speed $v_K$ of the center of the king pin K may also be determined as input data in term of being available in accordance with a control signal or by sensor data as direct or indirect measurement. Nevertheless, the calculation may reduce the required amount of data to be provided as input data.

As the ratio between the speed $v_T$ of the center of the rear axles 21, 22, 23 of the trailer 20 and the speed $v_K$ of the center of the kingpin K can be expressed by

$$\frac{v_T}{v_K} = \cos(\varepsilon + \varphi) \qquad \text{(equation (5´))},$$

the articulation angle $\varphi$ is estimated by equation (5), i.e.

$$\varphi = \cos^{-1}\left(\frac{v_T}{v_K}\right) - \varepsilon \qquad \text{(equation (5)),}$$

In summary, the articulation angle $\varphi$ according to the first embodiment of the method for estimating the articulation angle $\varphi$ is estimated based on the input data, i.e. the distance b between the front axle 11 and the rear axle 12, and the distance c between the rear axle 12 and the center of the king pin K, the instantaneous steering angle $\vartheta$, the speed $v_R$ of the center of the rear axle 12 of the towing vehicle with respect to point R, and the speed $v_T$ of the center of the rear axles 21, 22, 23 of the trailer 20 with respect to point T, and the respectively calculated variables, i.e. the distance r between point P as instantaneous center of velocity of the towing vehicle 10 and the rear axle 12 of the towing vehicle 10, the angle $\varepsilon$ between the vectors of the speed $v_R$ of the center of the rear axle 12 of the towing vehicle 10 and the speed $v_K$ of the center of the kingpin K, and the speed $v_K$ of the center of the king pin K.

Consequently, as a basic principle, the articulation angle $\varphi$ is estimated by using the wheel speed(s) of the towing vehicle 10 and the trailer 20 and steering angle $\vartheta$ as time varying signals. Specifically, the articulation angle $\varphi$ is estimated by using the wheel speed(s) of the non-steering axle of the towing vehicle 10 and/or the non-steering axle of the trailer 20 and steering angle $\vartheta$ as time varying signals. More specifically, the articulation angle $\varphi$ is estimated by using the geometric parameters of towing vehicle axle- and king pin bases.

According to a second exemplary embodiment of the method for estimating the articulation angle $\varphi$, the method uses the geometric data of the trailer 20, here the distance L between the point T and the center of the king pin K in the longitudinal direction of the trailer 20 and the distance w between the left and the right wheels of the rear axles 21, 22, 23 of the trailer 20, and the speed $v_{TL}$ of the left wheels of the rear axles 21, 22, 23 of the trailer 20 as well as the speed $v_{TR}$ of the right wheels of the rear axles 21, 22, 23 of the trailer 20 as input data.

Based on the distance w between the left and the right wheels of the rear axles 21, 22, 23 of the trailer 20 and the speed $v_{TL}$ of the left wheels of the rear axles 21, 22, 23 of the trailer 20 as well as the speed $v_{TR}$ of the right wheels of the rear axles 21, 22, 23 of the trailer 20, the distance $r_0$ between the point D as instantaneous center of velocity of the trailer 20 and the left wheel is calculated by equation (3), i.e.

$$r_0 = w \cdot \frac{min(v_{TL}, v_{TR})}{abs(v_{TL} - v_{TR})} \qquad \text{(equation (3)).}$$

Further, the distance $r_T$ between point D as instantaneous center of velocity of the trailer 20 and point T is calculated by equation (2), i.e.

$$r_T = r_0 + {}^w\!/_2 \qquad \text{(equation (2)).}$$

Since the sum of the angle $\varepsilon$ and articulation angle $\varphi$ can be expressed by

$$\varepsilon + \varphi = \tan^{-1}\left(\frac{L}{r_T}\right) \qquad \text{(equation (8´)),}$$

the articulation angle $\varphi$ can be expressed by equation (8), i.e.

$$\varphi = \tan^{-1}\left(\frac{L}{r_T}\right) - \varepsilon \qquad \text{(equation (8)).}$$

According to the second exemplary embodiment of the method for estimating the articulation angle $\varphi$, the angle $\varepsilon$ is set to 0 as being neglected. Consequently, the articulation angle $\varphi$ is estimated by equation (9), i.e.

$$\varphi = \tan^{-1}\left(\frac{L}{r_T}\right) \qquad \text{(equation (9)).}$$

As per the above, the second exemplary embodiment of the method for estimating the articulation angle $\varphi$ does not require any data with respect to the towing vehicle 10.

In summary, the articulation angle $\varphi$ according to the second embodiment of the method for estimating the articulation angle $\varphi$ is estimated based on the input data of the trailer 20, i.e. the distance L between the point T and the center of the king pin K in the longitudinal direction of the trailer 20, and the distance w between the left and the right wheels of the rear axles 21, 22, 23 of the trailer 20, and the speed $v_{TL}$ of the left wheels of the rear axles 21, 22, 23 of the trailer 20 as well as the speed $v_{TR}$ of the right wheels of the rear axles 21, 22, 23 of the trailer 20, and the respectively calculated variables, i.e. the distance $r_0$ between the point D as instantaneous center of velocity of the trailer 20 and the left wheel, and the distance $r_T$ between point D as instantaneous center of velocity of the trailer 20 and point T.

Consequently, as a basic principle, the articulation angle $\varphi$ is estimated by using the wheel speed(s) of the trailer 20 as the only time varying signals. Specifically, the articulation angle $\varphi$ is estimated by using the wheel speed(s) of the non-steering axle of the trailer 20 as time varying signals. More specifically, the articulation angle $\varphi$ is estimated by using the wheel speed(s) of the trailer 20 on both sides on the same axle, preferably on the non-steering axles, as time varying signals. Preferably, the geometric input data may be restricted to the geometric data of the axle- and wheelbases of the trailer 20.

According to a third exemplary embodiment of the method for estimating the articulation angle $\varphi$, the method combines the first and second embodiment of the method for estimating the articulation angle $\varphi$. Accordingly, the input data comprises the geometric data of the towing vehicle 10, here the distance b between the front axle 11 and the rear axle 12, and the distance c between the rear axle 12 and the center of the king pin K, and the geometric data of the trailer 20, here the distance L between the point T and the center of the king pin K in the longitudinal direction of the trailer 20, and the distance w between the left and the right wheels of the rear axles 21, 22, 23 of the trailer 20. Further, the input data comprises the instantaneous steering angle $\vartheta$, the speed $v_R$ of the center of the rear axle 12 of the towing vehicle 10 with respect to point R, and the speed $v_{TL}$ of the left wheels of the rear axles 21, 22, 23 of the trailer 20 as well as the speed $v_{TR}$ of the right wheels of the rear axles 21, 22, 23 of the trailer 20.

Based on the distance b between the front axle 11 and the rear axle 12 of the towing vehicle 10 and the instantaneous steering angle $\vartheta$, the distance r between point P as instantaneous center of velocity of the towing vehicle 10 and the rear axle 12 of the towing vehicle 10 is calculated by equation (1), i.e.

$$r = {b}/{\tan(\vartheta)} \qquad\qquad \text{(equation (1))}.$$

Further, the angle $\varepsilon$ between the vectors of the speed $v_R$ of the center of the rear axle 12 of the towing vehicle 10 and the speed $v_K$ of the center of the kingpin K is calculated by equation (4), i.e.

$$\varepsilon = \tan^{-1}\left(\frac{c}{r}\right) \qquad\qquad \text{(equation (4))}.$$

Based on the distance w between the left and the right wheels of the rear axles 21, 22, 23 of the trailer 20, and the speed $v_{TL}$ of the left wheels of the rear axles 21, 22, 23 of the trailer 20, as well as the speed $v_{TR}$ of the right wheels of the rear axles 21, 22, 23 of the trailer 20, the distance $r_0$ between the point D as instantaneous center of velocity of the trailer 20 and the left wheel is calculated by equation (3), i.e.

$$r_0 = w \cdot \frac{min(v_{TL}, v_{TR})}{abs(v_{TL} - v_{TR})} \qquad\qquad \text{(equation (3))}.$$

Further, the distance $r_T$ between point D as instantaneous center of velocity of the trailer 20 and point T is calculated by equation (2), i.e.

$$r_T = r_0 + {w}/{2} \qquad\qquad \text{(equation (2))}.$$

Since the sum of the angle $\varepsilon$ and articulation angle $\varphi$ can be expressed by

$$\varepsilon + \varphi = \tan^{-1}\left(\frac{L}{r_T}\right) \qquad\qquad \text{(equation (8'))},$$

the articulation angle $\varphi$ is calculated by equation (8), i.e.

$$\varphi = \tan^{-1}\left(\frac{L}{r_T}\right) - \varepsilon \qquad\qquad \text{(equation (8))}.$$

Consequently, as a basic principle, the articulation angle φ is estimated by using the wheel speed(s) of the towing vehicle 10 and the trailer 20 and steering angle ϑ as time varying signals. Specifically, the articulation angle φ is estimated by using the wheel speed(s) of the non-steering axle of the towing vehicle 10 and/or the non-steering axle of the trailer 20 and steering angle ϑ as time varying signals. More specifically, the articulation angle φ is estimated by using the geometric parameters of towing vehicle axle- and king pin bases. More specifically, the articulation angle φ is estimated by using the wheel speed(s) of the trailer 20 on both sides on the same axle, preferably on the non-steering axles, as time varying signals. Preferably, the geometric input data refers to the trailer geometric parameters of the towing vehicle axle- and kingpin bases plus the trailer axle- and wheelbases.

**Figure 6** shows a schematic lateral view on a vehicle according to an exemplary embodiment of the present invention. The vehicle may be the towing vehicle 10 or the trailer 20. The towing vehicle 10 or the trailer 20 provides an outer contour defined by the chassis 10a or 20a, respectively. The chassis 10a of the towing vehicle 10 or the chassis 20a of the trailer 20 provides corner points 10aa or 20aa, respectively, which may be selected as outer points of the contour of the towing vehicle 10 or trailer 20 relevant as reference points for detecting a potential collision.

The following description is made with respect to the trailer 20 as an exemplary vehicle of the vehicle combination of the towing vehicle 10 and the trailer 20. The trailer 20 comprises an image device 30, here a video camera, to record images of the surrounding of the trailer 20. The recorded images are transferred to a display device 60 to display the respective images. In the exemplary embodiment, the display device 60 is configured to combine images of the image device 60 with images of other image devices to provide the image 31 as a current image 31 in a bird's eye perspective as per Figs. 7 and 8. Even though the display device is shown as being comprised by the trailer 20, if assuming the trailer 20 as the represented vehicle, in other embodiments, the display device 60 may be comprised by the towing vehicle 10 to allow the display device 60 to be observed by a driver. In this context, it is noted that the description of the trailer 20 as per Fig. 6 is merely directed to explain the functionalities of the respective devices than to provide a specific arrangement of the devices on the trailer 20 and/or the towing vehicle 10. However, the arrangement of at least the image device 30 on the trailer 20 may be beneficial to allow an unobstructed view on the surrounding of the trailer 20.

The trailer 20 as exemplary vehicle of the vehicle combination further comprises a determination device 40 and a future position device 50. In the exemplary embodiment, the determination device 40 is configured to receive a current steering angle ϑ of the towing vehicle 10 and to determine a current articulation angle φ of the trailer 20. Based on the current steering angle ϑ of the towing vehicle 10 and the current articulation angle φ of the trailer 20, the future position device 50 calculates future positions of the four corner points 10aa of the chassis 10a of the towing vehicle 10 in at least one direction of travel of the towing vehicle 10 based on the current steering angle ϑ and future positions of the four corner points 20aa of the chassis 20a of the trailer 20 in at least one direction of travel of the at least one trailer 20 based on the current articulation angle φ.

The calculated future positions of the four corner points 10aa of the chassis 10a of the towing vehicle 10 and the four corner points 20aa of the chassis 20a of the trailer 20 are transmitted to the display device 60 to be displayed together with the image 31.

**Figure 7** shows a view on an image 31 of a surrounding of a towing vehicle 10 and a trailer 20 and the displaying tractrices 10aaa, 20aaa of the towing vehicle 10 and the trailer 20 for a forward direction of travel in a bird's eye perspective. The towing vehicle 10 is indicated by a rectangle in solid lines with calculated future positions of the towing vehicle 10 being represented by respectively generated tractrices 10aaa in solid lines for each corner point 10aa of the towing vehicle. The same applies for the representation of the trailer 20 and the tractrices 20aaa illustrated by the dotdashed line.

The image 31 of the surrounding of the towing vehicle 10 and the trailer 20 shows a road with the calculated future positions of the towing vehicle 10 and the trailer 20 mapped thereon. In Fig. 7, tractrices 10aaa of the towing vehicle 10 in the present representation assumes an exemplary current steering angle ϑ of 20 degrees resulting in an exemplary current articulation angle φ of 10 degrees and respective tractrices 10aaa, 20aaa. As apparent from Fig. 7 with respect to a direction of travel in the forward direction, the tractrices 10aaa, 20aaa intersect the boundaries of the road after further driving with the given current steering angle ϑ and respective current articulation angle φ. Such intersection may represent a represent collision with an object. If the distance to be travelled by the vehicle combination is more than the distance to potential collision, the driver or a self-driving system may have to correct the current steering angle ϑ.

**Figure 8** shows a view on an image 31 of a surrounding of a towing vehicle 10 and a trailer 20 and the displaying tractrices of the towing vehicle 10 and the trailer 20 for a reverse direction of travel in a bird's eye perspective. Fig. 8 is similar to Fig. 7 but relates to the direction of travel in the rearward direction. Further Fig. 8 differs from Fig. 7 in the exemplary current steering angle ϑ being 30 degrees resulting in an exemplary current articulation angle φ of 30 degrees and respective tractrices 10aaa, 20aaa.

**Figure 9** is a view on an image 31' of a surrounding of a trailer 20 and displaying tractrices 20aaa of the trailer 20 for a reverse direction of travel in a view in the direction of travel. As an example, Fig. 9 is also based on the assumption of the exemplary current steering angle ϑ being 30 degrees resulting in an exemplary current articulation angle φ of 30 degrees as per Fig. 8. The embodiment of Fig. 9 differs from the embodiment shown in Fig. 8 in the perspective provided by the image 31' and the respective mapping of tractrices 20aaa.

The invention has been described with respect to an exemplary embodiments. However, the invention is not limited to the exemplary embodiments. For example, the invention may be used for any combination of a towing vehicle and one or more trailers.

LIST OF REFERENCE SIGNS

| | |
|---|---|
| 10 | towing vehicle |
| 10a | chassis (towing vehicle) |
| 10aa | corner point (towing vehicle) |
| 10aaa | tractrix (towing vehicle) |
| 11 | front axle (towing vehicle) |
| 12 | rear axle (towing vehicle) |
| 20 | trailer |
| 20a | chassis (trailer) |
| 20aa | corner point (trailer) |
| 20aaa | tractrix (trailer) |
| 21 | first rear axle (trailer) |
| 22 | second rear axle (trailer) |
| 23 | third rear axle (trailer) |
| 30 | imaging device (image device) |
| 31 | image |
| 40 | determination device |
| 50 | future position device |
| 60 | display device |
| b | distance between front and rear axle (towing vehicle) |
| c | distance between rear axle and king pin (towing vehicle) |
| D | instantaneous center of velocity (ICV) point (trailer) |
| F | center of front axle (towing vehicle) |
| K | center of king pin (pivot) |
| L | distance between K (king pin (pivot)) and T (center of rear axle(s) of trailer) |
| P | instantaneous center of velocity (ICV) point (towing vehicle) |
| r | distance between P (ICV point of towing vehicle) and R (center of rear axle of towing vehicle) |
| $r_T$ | distance between D (ICV point of trailer) and T (center of rear axle(s) of trailer) |
| $r_0$ | distance between D (ICV point of trailer) and facing wheel(s) of rear axle(s) (trailer) |
| R | center of rear axle (towing vehicle) |
| T | center of rear axle(s) (trailer) |
| w | distance between wheels on opposite sides of the rear axle(s) (trailer) |
| $\varepsilon$ | angle between velocity vectors $v_K$ and $v_R$ |
| $\vartheta$ | steering angle |
| $v_F$ | speed of center of front axle (towing vehicle) |
| $v_K$ | speed of center of king pin (pivot) |
| $v_R$ | speed of center of rear axle (towing vehicle) |
| $v_T$ | speed of center of rear axle(s) (trailer) |
| $v_{TL}$ | speed of left wheel(s) of rear axle(s) (trailer; facing towards D) |
| $v_{TR}$ | speed of right wheel(s) of rear axle(s) (trailer; facing away from D) |
| $\varphi$ | articulation angle |

**Claims**

1. Method for avoiding collisions of a vehicle combination of a towing vehicle (10) and at least one trailer (20) towed by the towing vehicle (10), comprising the steps of:

   - determining a current steering angle ($\vartheta$) of the towing vehicle (S1),
   - calculating future positions of at least one outer point (10aa) of the contour of the towing vehicle (10) in at least one direction of travel of the towing vehicle (10) based on the current steering angle ($\vartheta$) (S2),
   - determining a current articulation angle ($\varphi$) of the at least one trailer (20) (S3),

- calculating future positions of at least one outer point (20aa) of the contour of the at least one trailer (20) in at least one direction of travel of the at least one trailer (20) based on the current articulation angle ($\varphi$) (S4),
- displaying an image (31, 31') of a surrounding of at least the towing vehicle (10) and/or the at least one trailer (20) in the at least one direction of travel of the towing vehicle (10) and/or the at least one trailer (20) (S5), and
- displaying the calculated future positions of the towing vehicle (10) and/or the at least one trailer (20) on the image (31, 31') (S6).

2. Method according to claim 1, wherein
the step of calculating future positions of at least one outer point (10aa, 20aa) of the contour of the towing vehicle (10) (S2) comprises the calculation of future positions of at least one corner point of the chassis (10a) of the towing vehicle (10), preferably at least two corner points of the chassis (10a) of the towing vehicle (10), more preferably at least two corner points of the chassis (10a) of the towing vehicle (10) on one side of the towing vehicle (10) in parallel to the direction of travel.

3. Method according to claim 1 or 2, wherein
the step of calculating future positions of at least one outer point (10aa, 20aa) of the contour of the at least one trailer (20) (S4) comprises the calculation of future positions of at least one corner point of the chassis (20a) of the at least one trailer (20), preferably at least two corner points of the chassis (20a) of the at least one trailer (20), more preferably at least two corner points of the chassis (20a) of the at least one trailer (20) on one side of the at least one trailer (20) in parallel to the direction of travel.

4. Method according to any one of the preceding claims, wherein
the method further comprises the step of generating a tractrix (10aaa) of the future positions of at least one outer point (10aa, 20aa) of the contour of the towing vehicle (10) based on the calculated future positions of at least one corner point of the chassis (10a) of the towing vehicle (10) to be displayed on the image (31, 31') (S2a).

5. Method according to any one of the preceding claims, wherein
the method further comprises the step of generating a tractrix (20aaa) of the future positions of at least one outer point (10aa, 20aa) of the contour of the at least one trailer (20) based on the calculated future positions of at least one corner point of the chassis (20a) of the at least one trailer (20) to be displayed on the image (31, 31') (S4a).

6. Method according to any one of the preceding claims, wherein
the step of displaying the calculated future positions of the towing vehicle (10) and/or the at least one trailer (20) on the image (31, 31') (S6) is performed in response to a trigger event, preferably based on a selection of a gear and/or a velocity of the vehicle combination below a predetermined velocity.

7. Method according to any one of the preceding claims, wherein
the future positions of the calculated future positions of the towing vehicle (10) and the at least one trailer (20) on the image (31, 31') are displayed by different indicators, preferably different in color and/or shape.

8. Method according to any one of the preceding claims, wherein
the method further comprises the step of generating a collision notification and/or the step of adapting the steering angle ($\vartheta$) by detecting an intersection of future positions of the towing vehicle (10) and/or the at least one trailer (20) with an object on the image (31, 31') (S7), wherein the collision notification preferably provides an acoustic, optic and/or tactile alarm.

9. Method according to any one of the preceding claims, wherein
the step of displaying an image of a surrounding of at least the towing vehicle (10) and/or the at least one trailer (20) (S5) is performed by recording at least one image (31, 31') by at least one imaging device arranged on the at least one trailer (20).

10. Method according to any one of the preceding claims, wherein
the step of determining the current steering angle ($\vartheta$) of the towing vehicle (10) (S1) and/or determining the current articulation angle ($\varphi$) of the at least one trailer (20) (S3) is performed by detecting and/or estimating the current steering angle ($\vartheta$) and/or articulation angle ($\varphi$).

11. Method according to any one of the preceding claims, wherein
the image (31, 31') of a surrounding of at least the towing vehicle (10) and/or the at least one trailer (20) is an image (31) in a bird's eye perspective or an image (31') providing a view in the at least one direction of travel.

12. Method according to any one of the preceding claims, wherein
the displaying of an image (31, 31') of a surrounding of at least the towing vehicle (10) and/or the at least one trailer (20) in the at least one direction of travel of the towing vehicle (10) and/or the at least one trailer (20) showing the calculated future positions of the towing vehicle (10) and/or the at least one trailer (20) on the image (31, 31') is adaptable, preferably in magnification.

13. Computer program product comprising instructions which, when the program is executed by a computer, cause the computer to carry out the method according to any one of the preceding claims.

14. Computer-readable medium comprising instructions which, when the program is executed by a computer, cause the computer to carry out the method according to any one of the claims 1 to 12.

15. Vehicle (10, 20) for a vehicle combination of a towing vehicle (10) and at least one trailer (20) towed by the towing vehicle (10), wherein the vehicle (10, 20) comprises

an image device (30) configured to record and/or configured to receive at least one image (31, 31') of a surrounding of at least the towing vehicle (10) and/or the at least one trailer (20) in at least one direction of travel of the towing vehicle (10) and/or the at least one trailer (20),
a determination device (40) configured to determine and/or receive determined information on a steering angle ($\vartheta$) of the towing vehicle (10) and/or the articulation angle ($\varphi$) of the at least one trailer (20),
a future position device (50) configured to calculate and/or to receive calculated information on future positions of at least one outer point (10aa) of the contour of the towing vehicle (10) in at least one direction of travel of the towing vehicle (10) based on the current steering angle ($\vartheta$) and/or future positions of at least one outer point (20aa) of the contour of the at least one trailer (20) in at least one direction of travel of the at least one trailer (20) based on the current articulation angle ($\varphi$), and
a display device (60) configured to display the at least one image (31, 31') together with the calculated future positions of the towing vehicle (10) and/or the at least one trailer (20) on the image (31, 31').

**Fig. 1**

**Fig. 2**

**Fig. 3**

$$v_T = v_R * \cos(\varepsilon+\varphi)/\cos(\varepsilon)$$

$$v_K = v_R/\cos(\varepsilon)$$

**Fig. 4**

$$r_T = L/\tan(\varepsilon+\varphi)$$

**Fig. 5**

**10, 20**

**30**

**10aa, 20aa**

**60** **50** **40**

**10a, 20a**

**10aa, 20aa**

**10aa, 20aa**

## Fig. 6

**20aaa**

**10aaa**

**31**

**10**

**20**

## Fig. 7

**Fig. 8**

**Fig. 9**

Europäisches
Patentamt

European
Patent Office

Office européen
des brevets

# EUROPEAN SEARCH REPORT

Application Number

EP 23 19 1808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/303847 A1 (LAVOIE ERICK MICHAEL [US]) 9 October 2014 (2014-10-09) | 1-3, 6-11, 13-15 | INV. B62D15/02 B60R1/00 |
| Y | * paragraphs [0025], [0028], [0077], [0091] – [0093], [0097]; claims; figures * | 12 | B62D13/06 |
| X | WO 2023/092065 A1 (CONTINENTAL AUTONOMOUS MOBILITY US LLC [US]) 25 May 2023 (2023-05-25) | 1,4,5, 13-15 | |
| Y | * paragraphs [0010], [0023], [0027]; claims; figures * | 12 | |
| Y | EP 2 481 636 A1 (NXP BV [NL]) 1 August 2012 (2012-08-01) * paragraphs [0019], [0038] – [0041]; claims; figures * | 12 | |

TECHNICAL FIELDS
SEARCHED      (IPC)

B62D
B60R

The present search report has been drawn up for all claims

| Place of search | Date of completion of the search | Examiner |
|---|---|---|
| The Hague | 1 February 2024 | Ducher, Alban |

EPO FORM 1503 03.82 (P04C01)

## ANNEX TO THE EUROPEAN SEARCH REPORT
## ON EUROPEAN PATENT APPLICATION NO.

EP 23 19 1808

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2024

| Patent document cited in search report | Publication date | Patent family member(s) | Publication date |
|---|---|---|---|
| US 2014303847 A1 | 09-10-2014 | NONE | |
| WO 2023092065 A1 | 25-05-2023 | NONE | |
| EP 2481636 A1 | 01-08-2012 | NONE | |

EPO FORM P0459

For more details about this annex : see Official Journal of the European Patent Office, No. 12/82